# EUROPÄISCHE PATENTANMELDUNG

(11) **EP 3 028 558 A1**
(43) Veröffentlichungstag der Anmeldung: **08.06.2016**
(21) Anmeldenummer: 15197665.1
(22) Anmeldetag: 02.12.2015
(51) Int. Cl.: A01D 89/00

(54) **AUFNAHMEVORRICHTUNG AN EINER ERNTEMASCHINE**

(30) Priorität: 03.12.2014 DE 102014117740
(71) Anmelder: B. Strautmann & Söhne GmbH u. Co. KG, 49196 Bad Laer (DE)
(72) Erfinder: Strautmann, Wolfgang, 49196 Bad Laer (DE); Kleine Niesse, Richard, 49536 Lienen (DE)
(74) Vertreter: Träger, Denis

(57) **Zusammenfassung**

Die Erfindung betrifft eine Aufnahmevorrichtung (1) an einer Erntemaschine, wie Ladewagen, Ballenpressen oder Feldhäcksler, umfassend
- eine antreibbare Trommel (2), die vorzugsweise mehrere aneinandergereihte Segmente (3) mit seitlichen Flanschen (55) umfasst und einen Trommelmanteldurchmesser (D) aufweist, wobei die Trommel (2) Aufnahmezinken (20) aufweist, deren Schenkel (22) den Trommelmanteldurchmesser (D) nach außen überragen und bei rotierender Trommel (2) Erntegut, vorzugsweise Halm- und Blattgut, vom Boden aufnehmen und
- einen Abstreifkamm (28) mit darauf angeordneten Abstreifern (30), die in einem freien Ende mit einer Vorderkante (32) auslaufen, wobei die, Vorderkante (32) sich an die radiale Umfangskontur der Trommel (2) anschmiegt,

Bei solchen Aufnahmevorrichtungen kann es bei der Futterübergabe von der Aufnahmevorrichtung zu einer nachgeordneten Schneid- und/oder Pressvorrichtung zu Störungen kommen.

Zur Beseitigung dieser Probleme wird vorgeschlagen, dass die Vorderkante (32) der Abstreifer (30) wenigstens eine Schneide (49) mit einem Winkel (α) ausbildet, so dass etwaiges an der Vorderkante (32) befindliches Erntegut abgeschert wird.

## Beschreibung

Die Erfindung betrifft eine Aufnahmevorrichtung an einer Erntemaschine nach dem Oberbegriff des Anspruchs 1.

Eine bekannte Aufnahmevorrichtung dieser Art nach der DE 19740589 A1 zeigt eine mit einem kammartigen Abstreifer zusammenwirkende Trommel, bei der nur die zur Achsrichtung der Trommel in offenen U-Schienen befestigten Schenkel der als Doppelschenkelfedern ausgeführten Aufnahmezinken linear ausgerichtet, aus dem äußeren Mantelkreis der Trommel hervortreten. Die U-Schienen sind in die Trommel eingelassen und nehmen die Windungsbereiche der Aufnahmezinken auf.

Bei der Erntegutaufnahme gelangt in die offenen U-Schienen Halmgut, welches von den kammartigen Abstreifern nicht sauber abgestreift werden kann, sondern von diesen in die oben offene U-Schiene gedrückt wird und sich auch vor den Abstreifern staut. Dies kann zu Stopf- und Wickelerscheinungen und Schäden an den Bauteilen führen. Gelangt die Trommel auf unebenen Böden in Bodennähe oder berührt sie den Boden, werden die Schenkel der Aufnahmezinken derart nach hinten abgelenkt, dass daraus die bereits genannten Schäden entstehen.

Eine weitere Aufnahmevorrichtung ist durch die Anmeldung US 2013/0167499 A1 bekannt. Hier sind ebenfalls Doppelschenkelfedern als Aufnahmezinken ausgebildet und auf in die Trommel versenkten Trageschienen angeordnet, wobei lediglich die Schenkel aus dem äußeren Mantelkreis der Trommel hervortreten. Hierbei sind mit Schlitzen versehene Abdeckplatten vorgesehen, welche die Aufnahmeräume der Spiralen der Doppelfederzinken derart abdecken, dass durch die Schlitze nur die Schenkel der Aufnahmezinken hervorragen. Die Anordnung der Aufnahmezinken verläuft ebenfalls parallel, bzw. linear zur Trommelachse.

Die Abflachungen im äußeren Mantelkreis, erzeugt durch die Abdeckplatten und vorstehende Schraubenköpfe, erschweren das Ablösen des Erntegutes von der Trommel durch die Abstreifer, da diese im abgeflachten Bereich der Abdeckplatten einen erweiterten Spalt aufweisen in welchem sich Erntegut verfangen und zu Stauungen führen kann. Um die Schraubenköpfe kann sich Halmgut legen und dadurch die Abstreifarbeit stören.

Ferner sind auch hier die Schenkel der Aufnahmezinken bei Bodenberührung der Trommel gegen Überdehnungsschäden nicht geschützt.

Bei der genannten Ausführung ist weiterhin nachteilig, dass die Aufnahmezinken in linearen Reihen quer zur Fahrtrichtung angeordnet sind. Hierdurch kann das von den Aufnahmezinken erfasste Erntegut nur schubweise an die nachgeordnete Vorrichtung übergeben werden, was z. B. bei einer Pressvorrichtung eines Ladewagens, die mit Schneidmessern für das Zerkleinern des Erntegutes ausgerüstet ist, zu stoßartigen Belastungsspitzen mit unruhigem Lauf und erhöhtem Leistungsbedarf führt.

Ferner ist die Entzerrung von Futterschwaden, die im Allgemeinen einen zur Mitte der Schwaden hin haufenförmig ansteigenden Querschnitt aufweisen, nicht möglich. Die größeren Futtermengen aus der Mitte des Futterschwads können so nicht, auch nicht teilweise, auf seitliche Schwadbereiche verlagert werden. Da eine Abflachung des Futterschwades nicht erfolgen kann, füllt sich der Laderaum eines Ladewagen oder die Presskammer einer Ballenpresse in der Mitte des Laderaumes, bzw. der Presskammer, in der Längsmitte schneller, was dazu führt, das in der Mitte der Ladung eine höhere Pressdichte im Erntegut herrscht als an den Seiten, d. h. die Ladung ist nicht optimal verteilt.

Die Erfindung hat sich die Aufgabe gestellt, die Futterübergabe von der Aufnahmevorrichtung zur nachgeordneten Schneid- und/oder Pressvorrichtung zu verbessern. Weiterhin ist es Aufgabe der Erfindung, eine montagefreundliche Aufnahmevorrichtung vorzuschlagen.

Diese Aufgabe wird gelöst durch eine Aufnahmevorrichtung nach dem Oberbegriff des Anspruchs 1, bei der die Vorderkante der Abstreifer wenigstens eine Schneide mit einem Winkel (α) ausbildet, so dass etwaiges an der Vorderkante befindliches Erntegut abgeschert wird.

Die Trommel der Aufnahmevorrichtung kann einstückig nach Art eines Rohres ausgebildet sein oder aus aneinandergereihten Segmenten bestehen.

Um den Austausch der Zinken ohne Demontage weiterer Teile, insbesondere der Abstreifer, zu ermöglichen laufen die Abstreifer in einem freien Ende mit einer Vorderkante aus, wobei die Vorderkante jeweils an die radiale Umfangskontur der Trommel heranreichen. Die Abstreifer sind oberhalb der Trommel angeordnet und übergreifen die Trommel, ausgehend von einer Vertikalen in Fahrtrichtung gesehen, vorzugsweise um weniger als 45°. Die Abstreifer nähern sich der Trommeloberfläche in etwa tangential an, so dass eine sanfte Weiterleitung des von den Aufnahmezinken aufgenommenen Ernteguts auf die Abstreifer bewirkt wird.

Ein besonderer Vorteil einer solchen Aufnahmevorrichtung, die von den Abstreifern nicht vollständig umschlungen wird, liegt in der Montage- und Wartungsfreundlichkeit beim Einsetzen bzw. eventuellen Austauschen von Aufnahmezinken: Während bei einer Aufnahmevorrichtung mit umschlingenden Abstreifern zunächst die Abstreifer demontiert werden müssen, damit die Aufnahmezinken zugänglich werden, kann die Montage von Aufnahmezinken an der erfindungsgemäßen Vorrichtung ohne vorherige Demontage der Abstreifer erfolgen.

Im Arbeitseinsatz nehmen die an der Trommel der Aufnahmevorrichtung befindlichen Aufnahmezinken das Erntegut zunächst vom Boden auf. Das Erntegut wird im Anschluss daran von der rotierenden Trommel durch einen Förderkanal in einen sich an den Förderkanal anschließenden Lade- oder Pressraum gefördert. Um das Erntegut von der rotierenden Trommel abzulösen ist ein Abstreifkamm mit daran installierten Abstreifern vorgesehen. Die Abstreifer weisen ein freies Ende auf und untergreifen mit Ihrer Vorderkante das von der rotierenden Trommel zugeführte Erntegut. Dabei ist es wesentlich für die Erfindung, dass die Abstreifer das Erntegut nicht nur untergreifen, sondern, soweit es in den Bereich der erfindungsgemäß vorgesehenen wenigstens einen Schneide gelangt, abscheren. Die Vorderkante der Abstreifer kann mittels einer einzigen Schneide diagonal abgeschrägt sein. Es kann aber auch vorgesehen sein, das zwei Schneiden vorgesehen sind, die spitz aufeinander zulaufen. Durch die Schneide reduziert sich die Gefahr, dass Erntegut sich um die Trommel wickelt oder sich in unerwünschter Weise ansammelt und nicht weitertransportiert wird. Insbesondere bei feuchtem oder mit längerer Halmstruktur versehenem Erntegut reduziert die Erfindung unerwünschte Materialansammlungen bzw. löst diese auf bevor hierdurch Störungen verursacht werden.

Die erfindungsgemäße Schneide der Abstreifer ist gegenüber der rotierenden Trommel schräg ausgerichtet weist einen spitz zulaufenden Winkel α auf. Durch den Winkel α erfolgt das Abscheren des Ernteguts mittels eines aus der schräg gestellten Schneide resultierenden ziehenden Schnitts. Der ziehende Schnitt reduziert den Kraftbedarf und verringert die Gefahr, dass Erntegut ungeschnitten zwischen Schneide und Trommel gelangt.

In einer vorteilhaften Ausführung ist die Trommel mit einer oder mehreren Gegenschneiden besetzt. Die auf der Trommel befindlichen Gegenschneiden weisen eine Schneidkante auf, die mit der Vorderkante der Abstreifer zusammenwirkt und die Schneidwirkung der auf dem Abstreifer befindlichen Schneide unterstützt. Die Gegenschneide kann entweder auf die Oberfläche der Trommel bzw., der die Trommel bildenden Segmente, aufgesetzt oder mittels einer hierfür vorgesehen Nut oder Vertiefung teilweise in die Oberfläche eingesetzt sein. Vorzugsweise ist einem Abstreifer wenigstens eine Gegenschneide zugeordnet. Es kann aber auch vorgesehen sein, dass auf dem Trommelmantel mehrere Gegenschneiden in Drehrichtung radial hintereinander angeordnet sind, so dass ein Abstreifern bei einer Trommelrotation mit mehreren Gegenschneiden zusammenwirkt.

Besonders vorteilhaft ist es dabei, wenn an der Gegenschneide ein Bereich vorgesehen ist, welcher die sich an den Zylindermantel anschmiegenden Abstreifer zunächst anhebt bevor Schneide und Gegenschneide scherend zusammenwirken. Der Abstand zwischen Abstreifer und Zylindermantel wird somit während der Trommelrotation grundsätzlich klein gehalten und nur für den kurzen Moment des Abscherens bzw. Abschneidens so weit vergrößert, dass Schneide und Gegenschneide die beschriebene Scherstelle ausbilden.

Wie bereits beschrieben kann die Trommel einstückig bzw. rohrartig ausgebildet oder aus mehreren Segmenten zusammengesetzt sein. Soweit die Trommel aus einzelnen Segmenten gebildet ist, sind diese beidseitig mit einem Flansch ausgestattet, welcher der Verbindung der Segmente dient. Die Unterteilung der Trommel in Einzelsegmente ermöglicht auf einfache Art und Weise die Integration einzelner Taschen in den Mantel der Trommel. Fertigungstechnisch ist es sehr aufwendig, erst eine komplette Trommel anzufertigen, in diese Durchbrüche einzubringen und die Durchbrüche dann mit Zinkenhaltern zu versehen, in welche die Aufnahmezinken so montiert werden können, das lediglich die Schenkel der Aufnahmezinken aus dem Trommelmantel hervorragen. Die Segmente sind vorzugsweise so konzipiert, dass sie hinsichtlich ihrer Breite in etwa der Breite der Aufnahmezinken entsprechen.

Besonders vorteilhaft ist es, wenn die Segmente Formstücke umfassen, deren äußere, kreisförmige Konturen Abschnitte eines Zylindermantels bilden. Der Spalt zwischen den im Arbeitseinsatz die Trommel überstreichenden Abstreifern und der kreisförmigen Kontur der Segmente kann so zum einen eng und zum anderen vor allem während der Trommeldrehung konstant ausgelegt sein.

Zwischen den Formstücken sind taschenförmige Zinkenhalter angebracht. Die Zinkenhalter weisen vorzugsweise die Form eines U-Profils auf. Sie dienen einerseits zur Verbindung der Formstücke, so dass die abwechselnd angeordneten Formstücke und Zinkenhalter kreisrunde Einzelsegmente ausbilden können, anderseits stellen sie gleichzeitig die zur Aufnahme der Zinken erforderlichen Einzeltaschen dar. Dabei ist es besonders günstig, wenn die Zinkenhalter die Sockel der Aufnahmezinken lückenlos aufnehmen. Lücken zwischen Sockel und Aufnahmetasche bzw. Zinkenhalter werden so vermieden, etwaige Abdeckungen erübrigen sich hierdurch.

Vorzugsweise sind in die Zinkenhalter Aufnahmezinken derart eingesetzt, dass deren Sockel an die Innenkontur der Zinkenhalter angepasst ist, so dass die Aufnahmezinken-Sockel von den Zinkenhalter formschlüssig aufgenommen werden. Die erfindungsgemäße, aus Segmenten zusammengesetzte, Trommel mit in die Zinkenhalter eingesetzten Zinken weist somit eine geschlossene Mantelfläche auf, deren Oberfläche zum einen von den Mantelflächenbereichen auf den Segmenten und zum anderen von der Außenkontur der in die Zinkentaschen eingesetzten Zinken, bzw. deren Sockelbereich, ausgebildet wird. Die geschlossene Mantelfläche verhindert, dass Fremdkörper oder Erntegut in das Innere der Segmente gelangen kann. Vorzugsweise weist die Oberfläche der Sockel der Zinken den gleichen Radius auf wie die Trommel. Übergänge und Vorsprünge zwischen Zinkensockel und Trommelmantel werden weitgehend vermieden.

Je nach Bedarf bzw. Einsatzbedingungen ist es auch möglich, auf einer Trommel Segmente mit unterschiedlicher Anzahl von Zinkenhaltern zu kombinieren. So können beispielsweise an den Außenseiten der Trommel Segmente mit fünf Zinkenhaltern - und damit fünf Aufnahmezinken - vorgesehen sein und im mittleren Bereich Segmente mit sechs Zinkenhaltern bzw. darin montierten Aufnahmezinken. Hierdurch kann die durch eine größere Erntegutmenge im mittleren Bereich verursachte Belastung auf mehr Aufnahmezinken verteilt und die Belastung pro Aufnahmezinken somit reduziert werden.

Von Vorteil ist es weiterhin, wenn die Trommel ein Zentralrohr umfasst, auf dem die Segmente mit einem radialen Winkelversatz (V) auf dem Zentralrohr aufbringbar sind, so dass die in den Zinkenhaltern montierten Aufnahmezinken ebenfalls mit dem radialen Winkelversatz (V) zueinander angeordnet sind. Die Einbeziehung eines Zentralrohrs ermöglicht die einfache Anbringung und Ausrichtung der Segmente zueinander.

Selbstverständlich ist es möglich, die Segmente so zu montieren, dass die Zinkenhalter in linearen Reihen angeordnet sind. Alternativ dazu ist es aber auch möglich, die Segmente so anzuordnen, dass die Zinkhalter mehrere spiralförmig angeordnete Reihen auf der Trommel bilden. Teilabschnitte der spiralförmigen Anordnung können auch gegenläufig ausgerichtet sein. Dies kann beispielsweise dann sinnvoll sein, wenn die Aufnahmevorrichtung besonders breit, insbesondere breiter als die nachgeordnete Schneid- und/oder Pressvorrichtung ist: Die gegenläufige, spiralförmige Anordnung kann dann in den äußeren Schwadbereichen durch eine zur Schwadmitte hin gerichtete Förderwirkung Erntegut von ganz außen Richtung Schwadmitte fördern und gleichzeitig durch eine entgegengesetzte Förderwirkung im mittleren Bereich Erntegutanteile von der Mitte weg fördern. Im Idealfall wird so einerseits die Breite des Futterschwads an die Breite der Press- und/oder Schneidvorrichtung angepasst und anderseits die Dicke des Schwads egalisiert.

Weiterhin ist es vorteilhaft, wenn zwischen den Flanschen benachbarter Segmente Distanzstücke mit Zentrieransatz angeordnet sind. Die Distanzstücke erleichtern die Anbringung der Segmente in definierten Abständen zueinander. Weiterhin kann mittels der Zentrieransätze eine exakte radiale Ausrichtung der Segmente gegeneinander bewirkt werden.

In den Flanschen können ein oder mehrere Zentrierlöcher zur Aufnahme der Distanzstücke vorgesehen und derart angeordnet sein, dass sie den Winkelversatz (V) der Segmente zueinander festlegen. Soweit lediglich ein Zentrierloch vorgesehen ist, lassen sich die Segmente nur in einer vordefinierten Stellung zueinander montieren. Soweit mehrere Zentrierlöcher vorgesehen sind, ist es möglich, aus gleichen Segmenten Trommeln mit unterschiedlichen Zinkenstellungen herzustellen.

In einer bevorzugten Ausführung der erfindungsgemäßen Vorrichtung sind auf der Trommel selbst bzw., soweit es sich um eine aus Segmenten zusammengesetzte Trommel handelt, im Verbindungsbereich zweier Segmente, Ringe vorgesehen, die den Trommeldurchmesser (D) überragen. Der Radius der Ringe ist größer als der Radius der den Trommelmantel bildenden Formstücke bzw. des Trommelmantels. Die Ringe überragen somit die Trommel. Im Arbeitseinsatz, das heißt: bei rotierender Trommel, wirken die Ringe als Abstandshalter zum Boden. Zwar wird die Aufnahmevorrichtung in aller Regel, beispielsweise durch seitlich angebrachte Tasträder, einen Höhensensor oder durch eine elektronische Abstandsmessung, in einem vordefinierten Abstand über die Bodenkontur geführt, jedoch ist es möglich, das zwischen den Tasträdern Unebenheiten, beispielsweise Erdhaufen oder Steine, vorhanden sind, die von den Tasträdern nicht erfasst werden. In diesem Fall würde die Trommel in direkten Kontakt mit dieser Unebenheit geraten und einen etwaig in diesem Bereich angebrachten Aufnahmezinken maximal, das heißt: bis zur Anlage an das Formstück bzw. die Trommelkontur, verbiegen, bzw. bis zur Beschädigung oder zum Bruch überdehnen. Solche Spitzenlasten werden durch die zwischen den Segmenten angeordneten Ringe vermieden, da diese als zusätzliche Abstandshalter zur Bodenoberfläche wirken. Es setzt somit nicht der Trommelmantel bzw. das Formstück auf dem Boden auf, sondern der die Trommel überragende Ring, so dass zwischen den Ringen ein weitgehend geschützter Bereich geschaffen wird.

Die Außenkontur der Ringe ist größer als die Außenkontur der des Trommelmantels. Damit schützen diese den Trommelmantel bei Bodenberührung, andererseits aber legt sich das insbesondere längere zu fördernde Halm - und Blattgut auf die Außenkonturen der Ringe auf. Da die Abstreifer unterhalb der Außenkontur beginnen, kann das Erntegut leicht von diesen angehoben werden. Dies führt zu geringem Kraftbedarf für den Antrieb der Pick-up, da sich Material nicht einquetschen kann und zu Stauungen führen kann.

Es kann vorgesehen sein, dass die die Trommel umlaufenden Ringe durch die Flansche der Segmente ausgebildet werden. Die einzelnen Segmente sind in diesem Fall entsprechend vorgefertigt. Beispielsweise ist es durch formgebende Fertigungsverfahren möglich, einen zunächst planebenen kreisrunden Flansch an seinem Außendurchmesser mit einer rohrartigen Bördelung zu versehen. Diese Bördelung kann dann den Außenring bilden, der im Arbeitseinsatz die Aufnahmevorrichtung bei Bodenkontakt abstützt.

Es kann aber auch vorgesehen sein, dass die durch die Flansche gebildeten Ringe durch zusätzliche, mit den Flanschen verbundene, Ringe ausgebildet werden. Solche zusätzlichen Ringen dienen der Verstärkung der Trommel und ermöglichen bei geeigneter konstruktiver Gestaltung auch ein evtl. erforderliches Auswechseln verschlissener Ringe. Die zusätzlichen Ringe können aus einzelnen Ringstücken gebildet werden, so dass die Montage auf oder zwischen den Segmenten erleichtert ist. Aus Einsatz- und/oder Fertigungsgründen können sie aus einem Metall, vorzugsweise einem verschleißfesten Material, oder aus einem ebenfalls vorzugsweise verschleißfesten Kunststoff gefertigt sein. Darüber hinaus ist auch eine Kombination, das heißt: das Überziehen oder Beschichten eines Metallringes beispielsweise mit einem Kunststoff, möglich.

Die zusätzlichen Ringe oder auch die Ringstücke können zwischen zwei Flanschen verschweißt oder verschraubt sein.

Die zur Oberfläche der Segmente hin auslaufenden Abstreifer können kurz oder lang sein. Als langen Abstreifer werden diejenigen Abstreifer bezeichnet, die bis an den Trommelmantel heranreichen. Soweit die Trommel mit Ringen versehen ist, die die Aufnahmevorrichtung im Arbeitseinsatz bei Bodenkontakt abstützen, können im Bereich dieser Ringe zusätzliche Abstreifer am Abstreifkamm angebracht sein. Da diese Abstreifer nicht bis an den Trommelmantel, sondern nur bis an die Ringe heranreichen, werden sie im Folgenden als kurze Abstreifer bezeichnet.

Bevorzugt wird eine Ausführungsform, bei der kurze und lange Abstreifer einander abwechseln. Gemeinsam formen lange und kurze Abstreifer den Abstreifkamm aus.

Die kurzen Abstreifer sind so konzipiert, dass deren Vorderkante sich an die radiale Umfangskontur der Flansche bzw. der mit den Flanschen verbundenen Ringen anschmiegt. Die kurzen Abstreifer sind somit dort angeordnet, wo auf der Trommel ein von der Trommeloberfläche beabstandeter Ring angeordnet ist bzw. zwei Segmente miteinander verbunden sind und die Flansche eine ringartige Umfangskontur ausbilden, die von der Trommel-Oberfläche beabstandet ist. Unabhängig davon, ob es sich um kurze oder lange Abstreifer handelt, ist es somit günstig, wenn die Kontur des Abstreifers an die Kontur der Trommel bzw. der die Segmente verbindenden Flansche herangeführt wird und sich dort abstands- und reibungsarm anschmiegt.

Vorzugsweise ist die Aufnahmevorrichtung so konzipiert, dass
- zwischen der Vorderkante der langen Abstreifer und dem Zylindermantel der Trommel und/oder, soweit weiterhin kurze Abstreifer vorgesehen sind,
- zwischen der Vorderkante der kurzen Abstreifer und der Umfangskontur des Ringes bzw. Flansches,
ein Spalt (x) verbleibt, der ein reibungsloses Rotieren der Trommel erlaubt. Dabei ist die Breite des Spaltes so gewählt, dass einerseits bei Rotation der Trommel möglichst wenig Reibung zwischen Trommel und Abstreifer entsteht und andererseits der Spalt trotzdem klein genug ist, um zu verhindern, dass Erntegut unter dem Abstreifer hindurchgezogen wird oder sich in diesem Bereich festsetzt.

Ist der Flanschbereich der Segmente als geschlossener Ring ausgeführt bzw. ist ein solcher Ring zusätzlich vorgesehen, ist es von Vorteil, wenn die dort angeordneten Abstreifer an ihrer Vorderkante einen profilierten Ausschnitt umfassen, welcher die Ringe berührungslos übergreift. Hierdurch schmiegt sich der Abstreifkamm mit einer über die gesamte Trommelbreite und auch im Bereich der Ringe im Wesentlichen gleichen Spaltbreite an die Trommel an, wodurch ein gleichmäßiger und lastspitzenarmer Fluss des Ernteguts bewirkt wird.

Alternativ zu einer nach außen hin geschlossenen Ringkontur im Bereich der Ringe bzw. Flansche kann vorgesehen sein, dass die Ringe nach außen hin eine Nut zur Führung der Vorderkante der dort jeweils angeordneten Abstreifer beinhalten. Die Ringe bilden somit an ihrer äußeren Umfangsseite eine nutartige Kontur aus.

Die dort angeordneten Abstreifer werden in diesem Fall an ihrem zur Trommel weisenden Ende vorzugsweise mit einer Kontur versehen, die an die Kontur der Nut angepasst ist.

Soweit die radiale Umfangskontur mit einer Nut oder einem offengelassenem Spalt versehen ist, können die kurzen Abstreifer mit ihrem freien Ende auch hierin enden, so dass sie bei rotierender Trommel das Erntegut untergreifen, wobei das Erntegut durch die hochstehenden Schenkel der Nutbegrenzung daran gehindert wird, in die Nut einzudringen. Das im Flanschbereich eintreffende Erntegut wird somit zunächst von den freien Enden der kurzen Abstreifer untergriffen, dann angehoben und widerstandsarm weitergeleitet.

Besonders günstig ist es, wenn auf dem Zylindermantel der Trommel Ringe oder Ringstücke vorgesehen sind, welche um den Zylindermantel umlaufenden Führungsbahnen ausbilden, in denen die Abstreifer geführt werden.

Die Ringe oder Ringstücke sind gegenüber dem Zylindermantel vorzugsweise senkrecht ausgerichtet und bilden so eine U-förmige Führungsbahnen. Andere Ausführungen, beispielsweise mit schräg ausgerichteten Ringwandungen, sind ebenfalls möglich. Die Führungsbahnen werden seitlich begrenzt durch Ringe oder Ringstücke, die jeweils zwei aufrecht stehende Schenkel ausbilden, zwischen denen die freien Enden der Abstreifer geführt werden.

Es kann vorgesehen sein, dass die Führungsbahn schmaler ist als der Abstreifer und die Kontur des Abstreifers in ihrem vorderen, innerhalb der Führungsbahne befindlichen Bereich, an die Breite der Führungsbahne angepasst ist. Die aufrecht stehenden Schenkel halten das zu fördernde Erntegut aus dem Bereich zwischen den Schenkeln - also aus der Führungsbahn - heraus, so dass dieses Material, nachdem es von der Spitze des Abstreifers untergriffen worden ist, leicht auf die Förderfläche der Abstreifer befördert wird und sich an der Spitze der Abstreifer kein Material ablegen kann.

Zur Vermeidung möglicher Stauungen des Ernteguts im Bereich, in dem sich bei Rotation der Trommel die Schenkel der Aufnahmezinken unter die Abstreifer zurückziehen, ist es vorteilhaft, dass Abstreifer vorgesehen sind, die sich im Einzugsbereich der Schenkel trapezförmig von einer Breite (b) auf eine Breite (b') verbreitern. Hierdurch wird die sich aus den spitz bzw. konisch zulaufenden Schenkeln der Aufnahmezinken ergebende Erweiterung zwischen den Schenkeln und den Abstreifern ausgeglichen. Die trapezförmige Gestaltung der Enden der Abstreifer ermöglicht somit eine konstante Einhaltung des Abstandes zwischen konischen Aufnahmezinken-Schenkel und gegenläufig konischen Abstreifern.

Die Erfindung wird nachstehend als Beispiel beschrieben und in den Figuren dargestellt.
- Fig. 1: zeigt die Aufnahmevorrichtung in einer perspektivischen Ansicht.
- Fig. 2: zeigt die Aufnahmevorrichtung in Vorderansicht mit den Schnitten A-A und B-B.

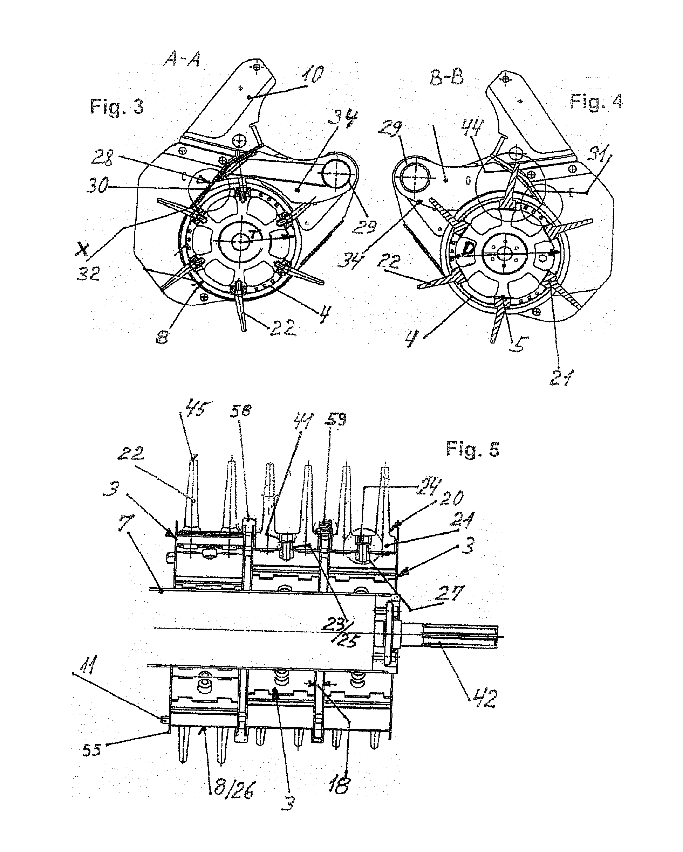

- Fig. 3: zeigt den Schnitt A-A.
- Fig. 4: zeigt den Schnitt B-B.
- Fig. 5: zeigt eine Teilansicht mit der Anordnung der Aufnahmezinken.
- Fig. 6: zeigt die perspektivische Darstellung eines Segmentes.
- Fig. 7: zeigt die Ansicht eines Flansches.
- Fig. 8a: zeigt die Anordnung der Abstreifer in einer Teilansicht von oben.
- Fig. 8b: zeigt eine Ausschnittsvergrößerung aus Fig. 8a.
- Fig. 9a: zeigt eine alternative Ausführungsform mit Abstreifer-Führungsbahnen.
- Fig. 9b: zeigt eine Detailvergrößerung einer Abstreifer-Führungsbahn.
- Fig. 9c: zeigt die Ausführungsform nach Fig. 9a in einer Vorderansicht.
- Fig. 9d: zeigt eine Seitenansicht nach Fig. 9a und 9b in Schnittdarstellung.
- Fig. 9e: zeigt ein einen Aufnahmezinken 20 in spezieller Ausführung.
- Fig. 10a: zeigt in einem Ausschnitt das Aneinanderliegen der Flansche 55 zur Bildung eines Ringes 56'.
- Fig. 10b: zeigt in einem Ausschnitt das Aneinanderliegen der Flansche 55 zur Bildung eines Ringes 56".
- Fig. 10c: zeigt in einem Ausschnitt das Aneinanderliegen der Flansche 55 zur Bildung eines Ringes 56"'.
- Fig. 11: zeigt ein Ausführungsbeispiel, welches mit Gegenschneiden 50 zusammenwirkende Abstreifer bildet.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

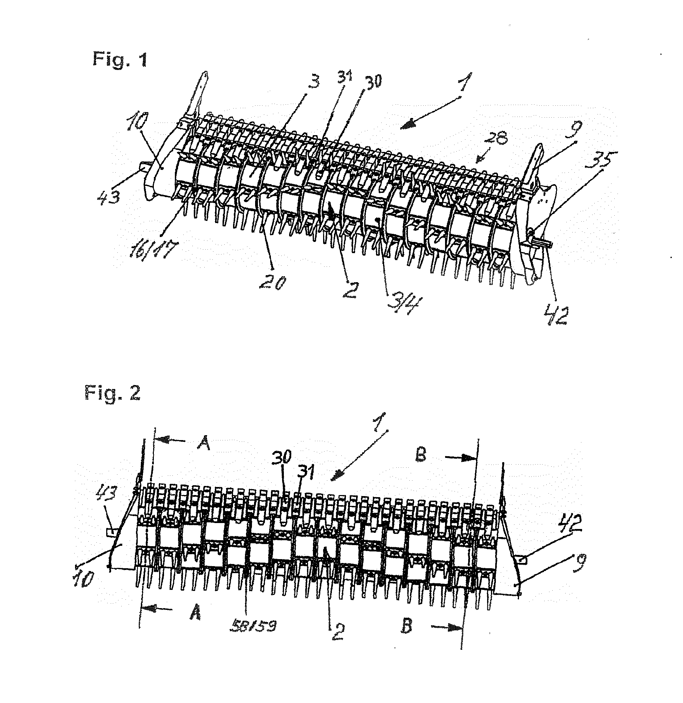

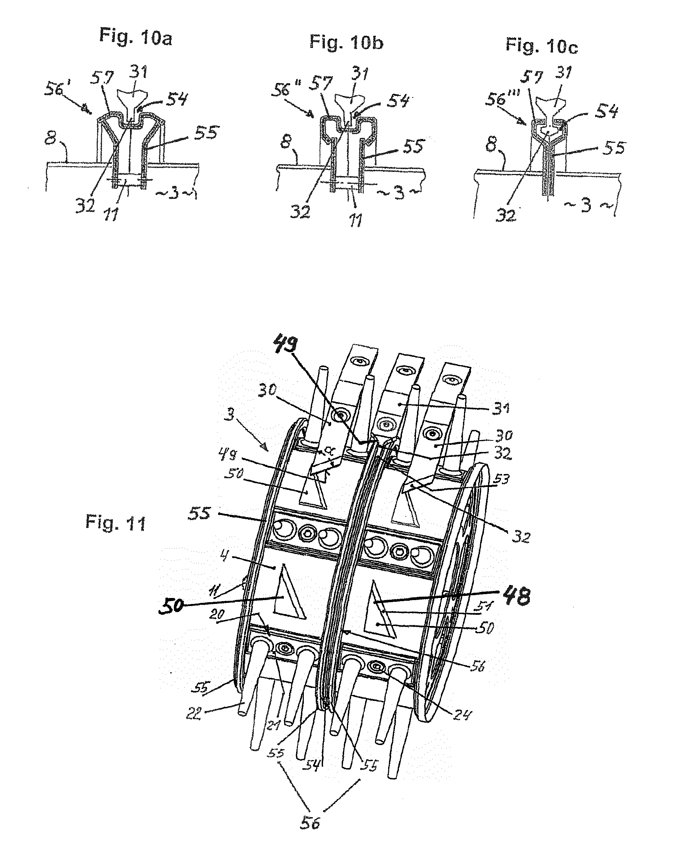

Fig. 1 zeigt eine Aufnahmevorrichtung 1, die zur Anbringung an einer nicht näher dargestellten Erntemaschine vorgesehen ist. Sie besteht im Wesentlichen aus einer mit Aufnahmezinken 20 besetzten Trommel 2, die in den Seitenteilen 9 und 10, welche mit dem Erntefahrzeug verbunden sind, gelagert ist. Ein Abstreifkamm 28 stellt eine starre Verbindung zwischen den Seitenteilen 9 und 10 her. Der Abstreifkamm 28 ist im dargestellten Ausführungsbeispiel mit langen Abstreifern 30 und kurzen Abstreifern 31 besetzt. Die Abstreifer 30 und 31 sind an ihrer Vorderkante jeweils mit einer Schneide versehen (vergl. Fig. 11).

Die Trommel 2 umfasst eine Anzahl von einheitlichen Segmenten 3, welche auf einem Zentralrohr 7 platziert sind. Das Zentralrohr 7 umfasst Antriebs- und Lagerzapfen 42 und 43, die in den Seitenteilen 9 und 10 von Lagern 35 aufgenommen wird.

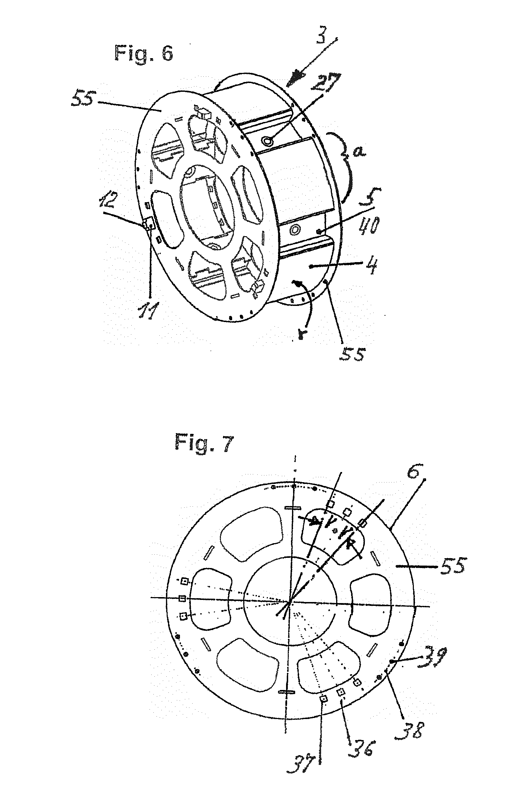

Die Segmente 3 sind als Schweißkonstruktion ausgeführt. Sie umfassen zwei Flansche 55, zwischen denen radial und, vorzugsweise gleichmäßig versetzt, taschenförmige Zinkenhalter 5 angebracht sind (vergl. Fig. 6). Die Anzahl der Zinkenhalter 5 richtet sich je nach erwünschter Ausführung, im vorliegenden Beispiel sind sechs Zinkenhalter 5 gewählt, da bei dieser Anzahl eine weitgehend stoßfreie und Belastungsspitzen vermeidende Erntegutübergabe an die nachfolgende Vorrichtung gewährleistet ist.

Je nach Bedarf bzw. Einsatzbedingungen ist es auch möglich, auf einer Trommel Segmente 3 mit unterschiedlicher Anzahl von Zinkenhaltern 5 zu kombinieren. So können beispielsweise an den Außenseiten der Trommel 2 Segmente 3 mit fünf Zinkenhaltern - und damit fünf Aufnahmezinken - vorgesehen sein und im mittleren Bereich Segmente 3 mit sechs Zinkenhaltern 5 bzw. darin montierten Aufnahmezinken 20. Hierdurch kann die durch eine größere Erntegutmenge im mittleren Bereich verursachte Belastung auf mehr Aufnahmezinken 20 verteilt und die Belastung pro Aufnahmezinken 20 somit reduziert werden.

Die Zwischenräume der Zinkenhalter 5 werden mit Formstücken 4 geschlossen, deren äußere Konturen Kreisbögen mit einem Radius r bilden. Die äußere Kontur der Formstücke 4 bildet somit einen Abschnitt a eines unterbrochenen Zylindermantels 8 mit einem Radius r aus. Die Flansche 55 sind mit Lochbildern 36 und 38 ausgestattet (vergl. Fig. 7). Jedes Lochbild 36 nimmt zwischen den Segmenten 3 in einem der Löcher 37 über Zentrieransätze 12 ein Distanzstück 11 auf. In den durch die Distanzstücke gebildeten Spalten 18 sind zusätzliche Ringe 58, bzw. Ringstücke 59 platziert.

Der Zusammenbau der Trommel 2 erfolgt durch Aufschieben der Segmente 3 auf das Zentralrohr 7, wobei die Bauteile vorzugsweise miteinander verschweißt werden.

Je nach Positionierung der Distanzstücke 11 ist es möglich, die Zinkenhalter 5 in zum Zentralrohr 7 parallel verlaufenden Reihen oder in spiralförmiger Anordnung mit vorzugsweise gleichmäßigem radialen Winkelersatz V auszuführen.

Bevorzugt wird die spiralförmige Anordnung der Zinkenhalter 5. Sie wird derart erzeugt, dass bei der Aneinanderreihung der Segmente 3 während des Zusammenbaus der Trommel 2, z. B. ein Distanzstück 11 in der Mitte des Lochbildes 36 eines Flansches 55 angebracht ist und am Flansch 55 des anschließenden Segments 3 in ein äußeres Loch 37 des Lochbildes 36 eingreift.

Die Steigungsrichtung der spiralförmigen Anordnung der Zinkenhalter 5, wird dadurch bestimmt, ob das Distanzstück 11, welches in einem Flansch 55 mittig im Lochbild 36 montiert ist, beim Flansch 55 des benachbarten Segments 3, in Drehrichtung gesehen, in einem vorderen oder hinteren Loch 37 aufgenommen wird.

Der durch die Distanzstücke 11 zwischen den Segmenten 3 erzeugte Spalt 18 dient zur Aufnahme der Ringe 58, bzw. der Ringstücke 59. Die Ringe 58 sind teilweise zwischen den Flanschen 55 benachbarter Segmente 3 eingesetzt und an diese angeschweißt. Da der Innendurchmesser der Ringe 58 kleiner ist als der Außendurchmesser der Flansche 55, müssen Ringe 58 und Segmente 3 im Rahmen der Montage abwechselnd auf das Zentralrohr 7 aufgesteckt werden.

Zur Erleichterung der Montage können alternativ zu kompletten Ringen 58 auch Ringe 58 bildende Ringstücke 59 eingesetzt werden. Vorteilhaft ist, dass die Ringstücke 59 auch nachträglich in die Spalten 18 zwischen den Segmenten 3 eingesetzt werden können. Die Ringstücke 59 werden mittels der Löcher 39 des Lochbildes 38 durch Schraubverbindungen befestigt. Sie können aber auch anders befestigt, beispielsweise angeschweißt, sein.

Nach Anbringung aller Segmente 3 und Fertigstellung der Trommel 2 werden in die von den Zinkenhaltern 5 gebildeten Taschen 40 Aufnahmezinken 20 eingesetzt. Diese umfassen einen Sockel 21, aus dessen Oberseite 26 zwei Schenkel 22 hervorstehen. Mittig im Sockel 21 ist eine Befestigungsbohrung 23 mit Ansenkung 41 angeordnet. Diese nimmt eine Schraube 24 auf, die mittels einer Schweißmutter 27, die mittig an der Unterseite des Zinkenhalters 5 angeordnet ist, den Aufnahmezinken 20 befestigt.

Der Sockel 21 ist so ausgeführt, dass er den Zinkenhalter 5 lückenlos und spaltfrei ausfüllt. An seiner Oberseite 26 weist er einen Radius r' auf, der mit dem Radius r der Formstücke 4 übereinstimmt, so dass sich ein geschlossener Zylindermantel 8 mit einem Durchmesser D ergibt.

Die Aufnahmezinken 20 bestehen im dargestellten Ausführungsbeispiel aus einem Kunststoff, bzw. einer Kunststofflegierung. Eine Metallbuchse 25 kleidet die Befestigungsbohrung 23 im Sockel 21 aus, sie ist etwas kürzer als das Abstandsmaß zwischen der Auflagefläche des Sockels 21 im Zinkenhalter 5 und der Auflagefläche des Kopfes der Schraube 24 und erzeugt beim Anziehen der Schraube 24 zunächst eine Vorspannung im Sockel 21 und danach einen festen Sitz derselben.

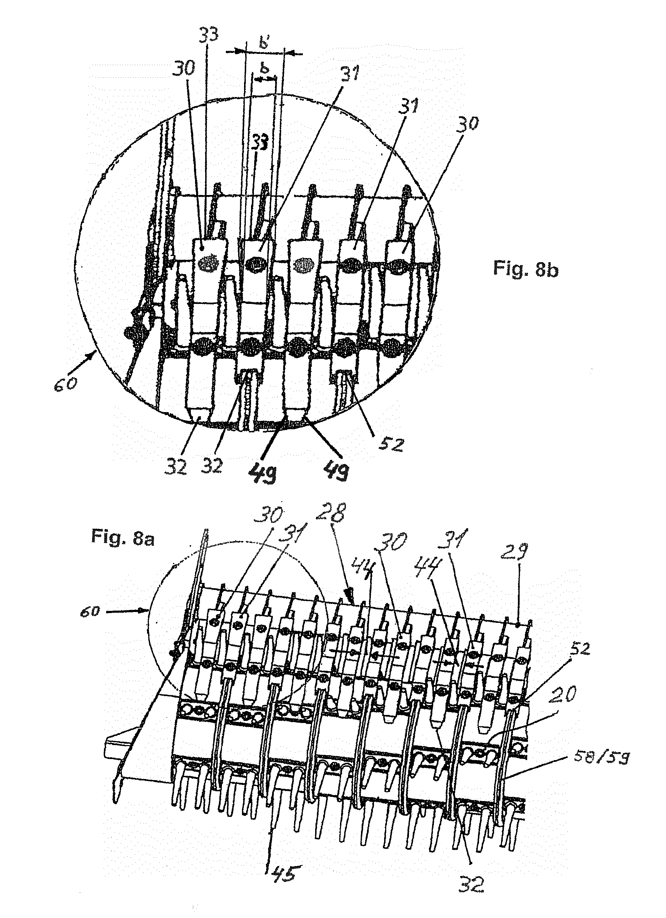

Fig. 8a zeigt die Anordnung der Abstreifer auf dem Abstreifkamm 28 von oben. Zu erkennen sind lange Abstreifer 30 und kurze Abstreifer 31. Der Abstreifkamm 28 umfasst das zwischen den Seitenteilen 9 und 10 fest angeordnete Tragrohr 29 mit den daran angeordneten Stegen 34, die zur Aufnahme der Abstreifer 30 und 31 mit Platten 44 versehen sind auf welche abwechselnd die langen und kurzen Abstreifer 30 und 31 aufgeschraubt sind.

Die langen Abstreifer 30 erstrecken sich jeweils von einer Hinterkante 33 bis zum Zylindermantel 8, wo eine Vorderkante 32 des Abstreifers 30 nahezu auf dem Zylindermantel 8 aufliegt. Dabei verbleibt zwischen der Vorderkante 32 und dem Zylindermantel 8 ein Spalt x, der ein reibungsloses Rotieren der Trommel 2 erlaubt.

Die kurzen Abstreifer 31 umfassen ebenfalls eine Hinterkante 33 von der aus sie sich zu einer Vorderkante 32 erstrecken.

Alternativ zu den in den Figuren dargestellten Ausführungsformen kann auch ein Abstreifkamm mit darauf angebrachten, gleich langen Abstreifern vorgesehen sein. Die freien Enden dieser gleich langen Abstreifer sind, wie auch die bereits beschriebenen Abstreifer, so konzipiert, dass sie an die Kontur der segmentierten Trommel angepasst sind und das Erntegut gleichmäßig und widerstandsarm weiterleiten.

Sowohl an den langen Abstreifern 30 als auch an den kurzen Abstreifern 31 können die Vorderkanten 32 in verschiedenen Ausführungsformen ausgebildet sein. Die Gestaltung einer ersten Ausführungsform der Vorderkanten 32 ist insbesondere den Figuren 8a und 8b zu entnehmen. Dabei besitzen die kurzen Abstreifer 31 an ihrer Vorderkante 32 ein Profil 52, welches den Ring 58, bzw. den aus Ringstücken 59 gebildeten Ring 58, berührungslos übergreift. Bei den langen Abstreifern 30 ist die Vorderkante 32 zum Trommelmantelfläche hin spitz ausgebildet, und weist jeweils eine trapezartige Kontur mit zwei Schneiden 49 auf, so dass das aufgenommene Erntegut untergriffen, bei Bedarf geschnitten, und widerstandsarm weitergeleitet wird.

Das von den Schenkeln 22 der Aufnahmezinken 20 erfasste Erntegut wird mittels der Abstreifer 30 und 31 angehoben und an eine nachgeordnete Press- und/oder Schneidvorrichtung weitergeleitet. Die Schenkel 22 der Aufnahmezinken 20 sind konisch ausgeführt und laufen zwischen den Abstreifern 30 und 31 in die Spalten 44 ein. Beim Weiterdrehen der Trommel 2 versinken die Schenkel 22 in den Spalten 44.

Fig. 8b zeigt eine Ausschnittsvergrößerung des Bereiches 60 aus Fig. 8a. Es soll verdeutlicht werden, dass die Form der Abstreifer an die Form der sich zu einer Spitze 45 hin verjüngenden, und damit konischen, Aufnahmezinken 20 angepasst sein kann. Dargestellt ist diese optionale Anpassung am Beispiel der äußeren drei Abstreifer. Diese verbreitern sich von einer Breite b auf eine Breite b' an ihrer Hinterkante 33. Selbstverständlich kann diese optionale Konizität nicht nur, wie dargestellt, die äußeren Abstreifer betreffen, sondern alle Abstreifer.

Die Konizität der Abstreifer 30 gleicht somit die Konizität der Schenkel 22 der Aufnahmezinken 20 aus, so dass die Abstände - und damit der Spalt 44 - zwischen Schenkel 22 und angepassten Abstreifern 30 und 31 etwa gleichbleibend gehalten werden.

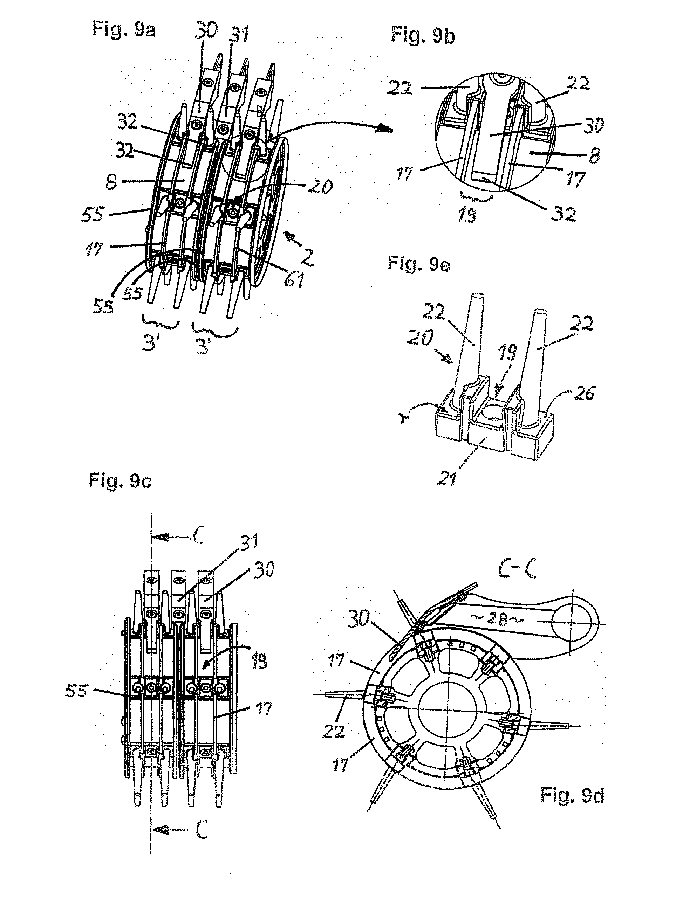

Fig. 9a zeigt zwei Segmente 3 einer alternativen Ausführungsform. Die langen Abstreifer 30 sind an Ihrer Vorderkante 32 schräg angefast und liegen mit ihrer Unterkante nahezu auf dem Zylindermantel 8 auf. Jedes Segment 3 umfasst Zinkentaschen 5, in welche je ein einen Sockel 21 sowie zwei Schenkel 22 umfassender Aufnahmezinken 20 eingesetzt ist. Die Aufnahmezinken 20 können so konzipiert sein, dass zwischen den Schenkel 22 eine vorzugsweise U-förmige Führungsbahn 19 ausgebildet ist (vergl. Fig. 9e). Zwischen radial benachbarten Aufnahmezinken 20 sind Ringstücke 17 angeordnet, die die U-förmige Führungsbahn 19 fortsetzen. Im Arbeitseinsatz rotiert die Trommel 2 somit unter den langen Abstreifern 30 durch eine insgesamt U-förmige Führungsbahn hindurch.

Die kurzen Abstreifer 31 sind jeweils im Bereich der Flanschstellen zweier benachbarter Segmente 3 angeordnet. Die Segmente 3 können hinsichtlich ihrer Flansche 55 unterschiedlich ausgeführt sein.

Die Fig. 10a, 10b und 10c zeigen drei unterschiedlich ausgeformte Ringe 56', 56" und 56"'. Die Ringe 56', 56" und 56'" sind entweder mittels geeigneter Fertigungsverfahren direkt aus den Flansche 55 gefertigt oder werden durch die Flansche 55 ergänzende Teile ausgebildet. Bei den Ausführungsformen nach den Fig. 10a und 10b sind zwischen den Flanschen 55 die weiter oben schon beschriebenen Distanzstücke 11 angeordnet. Bei allen drei Ausführungsformen 10a, 10b und 10c ersetzen am Außenumfang der Flansche 55 angeordnete Wülste 57 die weiter oben beschriebenen Ringe (58).

Bei der Montage werden die Segmente 3 aneinander gelegt. Dabei bilden die spiegelbildlich angeordneten, gegeneinander liegenden Wülste 57 jeweils einen Ring 56 mit umlaufender Nut 54 aus.

Die kurzen Abstreifer 31 weisen eine an die Nut 54 angepasste Vorderkante 32 auf, heben im Arbeitseinsatz das Erntegut an und vermeiden Stauerscheinungen vor dem Abstreifer 31. Bei der Ausführungsfigur nach Fig. 10c ist die Vorderkante 32 des Abstreifers 31 in einer käfigartigen Führungsnut gefangen.

Fig. 11 zeigt eine alternative Aufnahmevorrichtung 1 mit zusätzlichen Gegenschneiden 50. Bei dem in Fig. 11 dargestellten Beispiel handelt es sich um eine aus einzelnen Segmenten 3 bestehende Trommel 2. Zur Aufnahme insbesondere von feuchtem Erntegut, welches sich vor den Abstreifern stauen kann, sind die Abstreifer 30 an ihrer Vorderkante 32, einen Winkel (α) bildend, diagonal zugeschnitten und mit einer Schneide 49 ausgestattet.

Auf den Formstücken 4 geringfügig veränderter Segmente 3 sind Gegenschneiden 50 angeordnet, welche mit jeweils einem diagonal verlaufenden, als Fase ausgeführten Bereich 51 versehen sind. An den Bereich 51 der Gegenschneiden 50 schließt eine Schneidkante 48 an, die mit der Schneide 49 der langen Abstreifer 30 scherenartig zusammenwirkt. Zwischen der Oberseite der Gegenschneide 50 und der Unterseite des Abstreifers 30 befindet sich ein enger berührungsloser Spalt.

Erntegut, welches sich im Arbeitseinsatz an der Vorderkante 32 eines Abstreifers 30 verfängt, wird bei Rotation der Trommel 2 zwischen der Schneide 49 und Gegenschneide 50 abgeschert.

Der Bereich 51 verhindert Kollisionen der Abstreifer 30 mit der Gegenschneide 50, die bei während der Arbeit auftretenden schwankenden und vibrierenden Abstreifern 30 entstehen können, indem ein auf Kollisionskurs befindlicher Abstreifer 30 bei Berührung mit dem Bereich 51 angehoben wird. Mittels des den Abstreifer anhebenden Bereiches 51 ist es auch möglich, den Abstand x zwischen Abstreifer 30 und Trommel 2 während der Trommelrotation grundsätzlich klein zu halten und den Abstreifer 30 nur für den Schneidvorgang kurzzeitig soweit anzuheben, dass Schneide 49 und Gegenschneide 50 den Schneidvorgang bewirken können.

**Bezugszeichenliste:**

| | | | |
|---|---|---|---|
| 1 | Aufnahmevorrichtung | 41 | Ansenkung |
| 2 | Trommel | 42 | Antriebszapfen |
| 3 | Segment | 43 | Lagerzapfen |
| 4 | Formstück | 44 | Spalt |
| 5 | Zinkenhalter | 45 | Spitze |
| 6 | Flansch | 46 | - |
| 7 | Zentralrohr | 47 | - |
| 8 | Zylindermantel | 48 | Schneidkante |
| 9 | Seitenteil | 49 | Schneide |
| 10 | Seitenteil | 50 | Gegenschneide |
| 11 | Distanzstück | 51 | Bereich |
| 12 | Zentrieransatz | 52 | Profil |
| 13 | - | 53 | Spitze |
| 14 | - | 54 | Nut |
| 15 | - | 55 | Flansch |
| 16 | - | 56, 56', 56", 56'" | Ring |
| 17 | Ringstück | 57 | Wulst |
| 18 | Spalt | 58 | Ring |
| 19 | Führungsbahn | 59 | Ringstück |
| 20 | Aufnahmezinken | 60 | Ausschnitt |
| 21 | Sockel | | |
| 22 | Schenkel | | |
| 23 | Befestigungsbohrung | | |
| 24 | Schraube | α | Winkel |
| 25 | Metallbuchse | r | Radius (der Formstücke 4) |
| 26 | Oberseite | r' | Radius (der Zinkensockels |
| 27 | Schweißmutter | X | Spalt |
| 28 | Abstreifkamm | D | Durchmesser der Trommel |
| 29 | Tragrohr | a | Abschnitt (des |
| 30 | Abstreifer lang | b | Breite |
| 31 | Abstreifer kurz | b' | Breite |
| 32 | Vorderkante | V | Winkelversatz |
| 33 | Hinterkante | | |
| 34 | Steg | A-A | Schnitt |
| 35 | Lager | B-B | Schnitt |
| 36 | Lochbild Segmente | C-C | Schnitt |
| 37 | Loch | | |
| 38 | Lochbild Ringe | | |
| 39 | Loch | | |
| 40 | Tasche | | |

## Patentansprüche

1. Aufnahmevorrichtung (1) an einer Erntemaschine, wie Ladewagen, Ballenpressen oder Feldhäcksler, umfassend
- eine antreibbare Trommel (2), die vorzugsweise mehrere aneinandergereihte Segmente (3) mit seitlichen Flanschen (55) umfasst und einen Trommelmanteldurchmesser (D) aufweist, wobei die Trommel (2) Aufnahmezinken (20) aufweist, deren Schenkel (22) den Trommelmanteldurchmesser (D) nach außen überragen und bei rotierender Trommel (2) Erntegut, vorzugsweise Halm- und Blattgut, vom Boden aufnehmen und
- einen Abstreifkamm (28) mit darauf angeordneten Abstreifern (30), die in einem freien Ende mit einer Vorderkante (32) auslaufen, wobei die, Vorderkante (32) sich an die radiale Umfangskontur der Trommel (2) anschmiegt,
**dadurch gekennzeichnet, dass** die Vorderkante (32) der Abstreifer (30) wenigstens eine Schneide (49) mit einem Winkel (α) ausbildet, so dass etwaiges an der Vorderkante (32) befindliches Erntegut abgeschert wird.

2. Aufnahmevorrichtung (1) nach Anspruch 1, **dadurch gekennzeichnet, dass** die Trommel (2) mit Gegenschneiden (50) besetzt ist, die mit der Vorderkante (32) der Abstreifer (30) zusammenwirken.

3. Aufnahmevorrichtung (1) nach Anspruch 2, **dadurch gekennzeichnet, dass** an der Gegenschneide (50) ein Bereich (51) vorgesehen ist, welcher die sich an den Zylindermantel (8) anschmiegenden Abstreifer (30) anhebt bevor die Schneidkante (48) der Gegenschneide (50) mit der Vorderkante (32) der Abstreifer (30) zusammenwirkt.

4. Aufnahmevorrichtung (1) nach einem der Ansprüche 1 bis 3, **dadurch gekennzeichnet, dass** die Segmente (3) der Trommel (2) Formstücke (4) umfassen, deren äußere, kreisförmige Konturen Abschnitte (a) eines Zylindermantels (8) bilden.

5. Aufnahmevorrichtung (1) nach einem der Ansprüche 1 bis 4, **dadurch gekennzeichnet, dass** die Segmente Zinkenhalter (5) für die Aufnahmezinken (20) aufweisen, in welche Aufnahmezinken (20) eingesetzt sind, deren Sockel (21) an die Innenkontur der Zinkenhalter (5) angepasst ist, so dass die Sockel (21) von den Zinkenhalter (5) formschlüssig aufgenommen werden.

6. Aufnahmevorrichtung (1) nach einem der Ansprüche 1 bis 5, **dadurch gekennzeichnet, dass** die Trommel (2) aus Segmenten (3) gebildet wird, die eine unterschiedliche Anzahl von Zinkenhaltern (5) aufweisen.

7. Aufnahmevorrichtung (1) nach einem der Ansprüche 1 bis 6, **dadurch gekennzeichnet, dass** die Trommel (2) ein Zentralrohr (7) umfasst, auf dem die Segmente (3) mit einem radialen Winkelversatz (V) aufbringbar sind, so dass die in den Zinkenhaltern (5) montierten Aufnahmezinken (20) ebenfalls mit dem radialen Winkelversatz (V) zueinander angeordnet sind.

8. Aufnahmevorrichtung (1) nach einem der Ansprüche 1 bis 7, **dadurch gekennzeichnet, dass** auf der Trommel (2) bzw. im Verbindungsbereich zweier Segmente (3) Ringe (56) vorgesehen sind, die den Trommeldurchmesser (D) überragen.

9. Aufnahmevorrichtung (1) nach Anspruch 8, **dadurch gekennzeichnet, dass** die Ringe (56) durch die Flansche (55) ausgebildet werden.

10. Aufnahmevorrichtung (1) nach Anspruch 8, **dadurch gekennzeichnet, dass** die Ringe (56) durch mit den Flanschen (55) verbundene Ringe (58) oder Ringstücke (59) ausgebildet werden.

11. Aufnahmevorrichtung (1) nach einem der Ansprüche 1 bis 10, **dadurch gekennzeichnet, dass** am Abstreifkamm (28) Abstreifer (31) vorgesehen sind, die in einem freien Ende mit einer Vorderkante (32) auslaufen und mit den Ringen (56) zusammenwirken.

12. Aufnahmevorrichtung (1) nach einem der Ansprüche 1 bis 11, **dadurch gekennzeichnet, dass**:
- zwischen der Vorderkante (32) der Abstreifer (30) und dem Zylindermantel (8) der Trommel (2) und/oder
- der Vorderkante (32) der Abstreifer (31) und der Umfangskontur des Flansches (55)
ein Spalt (x) verbleibt, der ein reibungsloses Rotieren der Trommel (2) erlaubt.

13. Aufnahmevorrichtung (1) nach einem der Ansprüche 11 oder 12, **dadurch gekennzeichnet, dass** die Abstreifer (31) an ihrer Vorderkante (32) ein Profil aufweisen, welches mit der Kontur der Ringe (56) zusammenwirkt.

14. Aufnahmevorrichtung (1) nach einem der vorhergehenden Ansprüche, **dadurch gekennzeichnet, dass** auf dem Zylindermantel (8) der Trommel (2) Ringe (16) oder Ringstücke (17) vorgesehen sind, welche um den Zylindermantel (8) umlaufende Führungsbahnen (19) ausbilden, in denen die Abstreifer (30) geführt werden.

15. Aufnahmevorrichtung (1) nach einem der vorhergehenden Ansprüche, **dadurch gekennzeichnet, dass** die Abstreifer (30, 31) sich im Einzugsbereich der Schenkel (22) der Aufnahmezinken (20) trapezförmig von einer Breite (b) auf eine Breite (b') verbreitern.
